# DEMANDE DE BREVET EUROPEEN

(11) **EP 1 343 239 A1**
(43) Date de publication de la demande: **10.09.2003**
(21) Numéro de dépôt: 03290558.0
(22) Date de dépôt: 07.03.2003
(51) Int. Cl.: H02G 3/10, H02G 3/08

(54) **Rehausse pour boîtier pour appareillage électrique**

(30) Priorité: 07.03.2002 FR 0202892
(71) Demandeur: LEGRAND, F-87000 Limoges (FR); LEGRAND SNC, F-87000 Limoges (FR)
(72) Inventeur: Adam, Damien, 72240 Domfront en Champagne (FR)
(74) Mandataire: Santarelli

(57) **Abrégé**

La présente invention concerne une rehausse (100) apte à être positionnée sous un boîtier pour appareillage électrique à disposer le long d'une goulotte en saillie d'une paroi, cette rehausse présentant la forme d'un cadre adapté aux dimensions extérieures dudit boîtier.

Selon l'invention, elle comporte une pluralité de pièces (110, 120) distinctes assemblées entre elles, lesdites pièces présentant des aménagements (114, 115, 117, 124, 125, 127) pour prendre différentes positions relatives correspondant à différentes dimensions extérieures de boîtier.

## Description

La présente invention concerne de manière générale les boîtiers pour appareillage électrique à disposer le long d'une goulotte en saillie d'une paroi.

Plus particulièrement, elle concerne une rehausse apte à être positionnée sous un tel boîtier, présentant la forme d'un cadre adapté aux dimensions extérieures dudit boîtier.

Actuellement, les rehausses du type connu sont réalisées d'une seule pièce formée par moulage d'une matière plastique et présentant alors des dimensions figées à celles du boîtier auquel elles doivent être adaptées.

Il est donc nécessaire de fournir autant de rehausses que de boîtiers de dimensions différentes, ce qui implique autant de lignes de fabrication de rehausses différentes que de boîtiers existants.

L'invention a pour but de limiter le nombre de rehausses à fabriquer tout en conservant différentes tailles de boîtier pour appareillage électrique, et de permettre ainsi de réduire l'outillage nécessaire à leur réalisation.

Plus particulièrement, selon l'invention, cette rehausse est caractérisée en ce qu'elle comporte au moins deux pièces distinctes assemblées entre elles, lesdites pièces présentant des aménagements pour prendre différentes positions relatives correspondant à différentes dimensions extérieures du boîtier.

D'autres caractéristiques non limitatives et avantageuses de la rehausse selon l'invention sont les suivantes :
- lesdits aménagements comprennent, sur chacune desdites pièces, au moins une ligne de prédécoupe s'étendant suivant la hauteur de ladite pièce et autorisant une réduction de la longueur de celle-ci en vue de la réduction de la longueur et/ou de la largeur de ladite rehausse ;
- lesdits aménagements comprennent, sur chacune desdites pièces, au moins deux premiers moyens d'accrochage espacés l'un de l'autre et au moins un deuxième moyen d'accrochage complémentaire dudit premier moyen d'accrochage ;
- le premier moyen d'accrochage est une nervure s'étendant suivant la hauteur de chaque pièce et le deuxième moyen d'accrochage est une rainure apte à être glissée sur ladite nervure ;
- ladite nervure présente une section en T ;
- ledit deuxième moyen d'accrochage est porté en saillie par un plot prévu à une extrémité de ladite pièce correspondante, ce plot étant pourvu d'un trou traversant destiné à accueillir un organe de fixation du boîtier à ladite paroi ;
- au moins deux desdites pièces comprennent chacune, à une extrémité, une rainure d'assemblage s'étendant suivant la hauteur de ladite pièce et apte à recevoir par emboîtement une extrémité d'une autre pièce ;
- les deux pièces comprennent chacune, à leurs deux extrémités, des rainures d'assemblage s'étendant suivant la hauteur de ladite pièce et aptes à recevoir par emboîtement l'extrémité d'autres pièces ;
- les deux pièces comprennent chacune, à proximité de chaque ligne de prédécoupe, une rainure d'assemblage apte à recevoir par emboîtement l'extrémité d'une autre pièce ;
- la rehausse comporte deux pièces en forme de L ;
- elle comporte quatre pièces, deux pièces longues et deux pièces courtes ; et
- chaque pièce est réalisée en une seule partie par moulage d'une matière plastique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective en éclaté d'un premier mode de réalisation d'une rehausse selon l'invention ;
- la figure 2 est une vue schématique en perspective de dessus de la rehausse de la figure 1 assemblée selon une première configuration d'assemblage et positionnée en dessous d'un boîtier pour appareillage électrique ;
- la figure 3 est une vue schématique en perspective de côté du boîtier pour appareillage électrique représenté sur la figure 2 assemblé à la rehausse de la figure 2 ;
- la figure 4 est une vue schématique en perspective de dessus de la rehausse de la figure 1 assemblée selon une deuxième configuration d'assemblage avant découpe des parties débordantes de celle-ci ;
- la figure 5 est une vue schématique en perspective de dessus de la rehausse de la figure 4 montrant la découpe des parties débordantes de celle-ci ;
- la figure 6 est une vue schématique en perspective de côté de la rehausse de la figure 5 positionnée sous une platine formant le fond d'un autre boîtier pour appareillage électrique ;
- la figure 7 est une vue en perspective de dessus du boîtier pour appareillage électrique assemblé à la rehausse de la figure 5 ;
- la figure 8 est une vue schématique en perspective de dessus en éclaté d'un deuxième mode de réalisation de la rehausse selon l'invention ;
- la figure 9 est une vue en perspective de dessous de la rehausse de la figure 8 assemblée selon une première configuration d'assemblage et positionnée sous un fond de boîtier ;
- la figure 10 est une vue en perspective de dessus de la rehausse de la figure 8 assemblée selon une deuxième configuration d'assemblage ;
- la figure 11 est une vue en perspective de dessus de la rehausse de la figure 8 assemblée selon une troisième configuration d'assemblage ; et
- la figure 12 est une vue en perspective de dessus de la rehausse de la figure 8 assemblée selon une quatrième configuration d'assemblage.

En préliminaire, on notera que les éléments identiques ou similaires des différents modes de réalisation de l'invention représentés seront, dans la mesure du possible, référencés par les mêmes signes de référence et ne seront pas décrits à chaque fois.

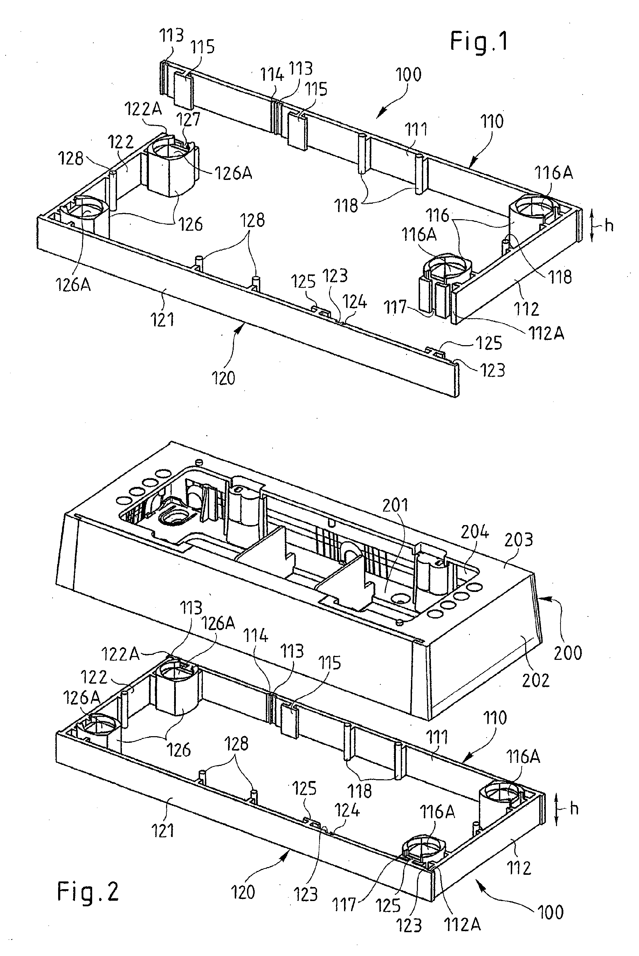

Sur les figures 1 à 3, on a représenté une rehausse 100 apte à être positionnée sous un boîtier 200 pour appareillage électrique à disposer le long d'une goulotte (non représentée) en saillie d'une paroi (non représentée).

Le boîtier 200 est tout à fait classique et comporte un fond 201 bordé par une paroi latérale 202 et fermé en partie supérieure par une plaque 203 pourvue d'une fenêtre 204 donnant accès aux moyens d'actionnement des différents appareillages électriques qu'il contient.

Cette rehausse 100 présente la forme d'un cadre d'une hauteur h donnée, adapté aux dimensions extérieures du boîtier 200. La rehausse 100 comprend ainsi deux montants longitudinaux 111, 121 et deux montants transversaux 112, 122.

Avantageusement, et c'est l'objet de la présente invention, cette rehausse 100 comporte une pluralité de pièces 110, 120 distinctes assemblées entre elles, lesdites pièces 110, 120 présentant des aménagements pour prendre différentes positions relatives correspondant à différentes dimensions extérieures de boîtier.

Selon le mode de réalisation représenté sur les figures 1 à 7, la rehausse 100 comporte deux pièces 110, 120 distinctes en forme de L, chacune des pièces 110, 120 étant réalisée en une seule partie par moulage d'une matière plastique et formant un montant longitudinal 111, 121 de la rehausse ainsi qu'un montant transversal 112, 122 de la rehausse 100 (voir figure 1).

Lesdits aménagements de la rehausse 100 comprennent, sur chacune des pièces 110, 120, une ligne de prédécoupe 114, 124 s'étendant suivant la hauteur h de ladite pièce 110, 120 et autorisant une réduction de la longueur de celle-ci en vue de la réduction de la longueur de ladite rehausse 100.

Ici, chaque ligne de prédécoupe 114, 124 est prévue dans chaque montant longitudinal 111, 121 de la rehausse 100, à distance de son extrémité libre, et autorise la cassure de chaque montant longitudinal 111, 121 pour en réduire la longueur.

Ici, les montant transversaux 112, 122 de la rehausse 100 attachés auxdits montants longitudinaux ne comportent pas de ligne de prédécoupe et la largeur de ladite rehausse 100 est donc fixe.

En outre, comme le montre la figure 1, lesdits aménagements comprennent, sur chacune desdites pièces 110, 120, au moins deux premiers moyens d'accrochage 115, 125 espacés l'un de l'autre et au moins un deuxième moyen d'accrochage 117, 127 complémentaire dudit premier moyen d'accrochage 115, 125.

Plus particulièrement, selon l'exemple représenté sur la figure 1, chaque montant longitudinal 111, 121 formé par chaque pièce 110, 120 comporte, à proximité de son extrémité libre, un premier moyen d'accrochage 115, 125 puis, à une certaine distance de celui-ci, un autre premier moyen d'accrochage 115, 125.

En outre, il est prévu, à l'extrémité libre de chaque montant transversal 112, 122 formé par chaque pièce 110, 120, le deuxième moyen d'accrochage 117, 127 complémentaire dudit premier moyen d'accrochage 115, 125.

Ici, chaque premier moyen d'accrochage est une nervure 115, 125 à section en T s'étendant suivant la hauteur h de chaque pièce 110, 120, et le deuxième moyen d'accrochage est une rainure 117, 127 dont la section est adaptée à celle de la nervure à section en T pour être glissée sur ladite nervure 115, 125.

Comme le montrent les figures 1 et 2, à chaque coin du cadre rectangulaire constituant la rehausse 100, il est prévu un plot 116, 126 percé d'un trou 116A, 126A traversant destiné à accueillir un organe de fixation 300 du boîtier 200 à ladite paroi.

Ici, chaque pièce 110, 120 porte deux plots 116, 126, un premier plot 116, 126 étant positionné à proximité de l'extrémité libre 112A, 122A du montant transversal 112, 122 et un deuxième plot 116, 126 étant positionné à proximité de l'autre extrémité dudit montant transversal 112, 122, rattachée au montant longitudinal 111, 121

Avantageusement, chaque deuxième moyen d'accrochage constitué par une rainure 117, 127 est porté en saillie par le plot 116, 126 situé à proximité de l'extrémité libre 112A, 122A du montant transversal 112, 122 correspondant.

En outre, chacune des pièces 110, 120 de la rehausse 100 représentée sur les figures 1 à 7 comporte des nervures de rigidification 118, 128 réparties sur la longueur de chacune des pièces 110, 120 et s'étendant suivant la hauteur h de la rehausse.

Chaque montant longitudinal 111, 121 de chaque pièce 110, 120 de la rehausse 100 comprend, à une extrémité libre opposée au plot 116, 126, une rainure d'assemblage 113, 123 s'étendant suivant la hauteur h dudit montant longitudinal 111, 121 et apte à recevoir par emboîtement l'extrémité libre 112A, 122A du montant transversal 112, 122 de l'autre pièce 110, 120.

Plus particulièrement, la tranche de cette extrémité libre 112A, 122A de chaque montant transversal 112, 122 s'engage dans la rainure d'assemblage 113, 123 prévue à l'extrémité libre du montant longitudinal 111, 121 correspondant.

Au surplus, chaque montant longitudinal 111, 121 comprend, à proximité de sa ligne de prédécoupe 114, 124, une rainure d'assemblage 113, 123 destinée à recevoir par emboîtement l'extrémité libre 112A, 122A du montant transversal 112, 122 correspondant.

Ainsi, pour former la rehausse 100 représentée sur la figure 2, il suffit de glisser, d'une part, la rainure 117 portée par le plot 116 du montant transversal 112 de la pièce 110 sur la première nervure 125 située à l'extrémité libre du montant longitudinal 121 de l'autre pièce 120, et, d'autre part, la rainure 127 portée par le plot 126 du montant transversal 122 de la pièce 120 sur la première nervure 115 située à l'extrémité libre du montant longitudinal 111 de l'autre pièce 110.

Lors de cet assemblage, les extrémités libres 112A, 122A de chacun des montants transversaux 112, 122 s'engagent dans les rainures d'assemblage 113, 123 correspondantes des montants longitudinaux 111, 121.

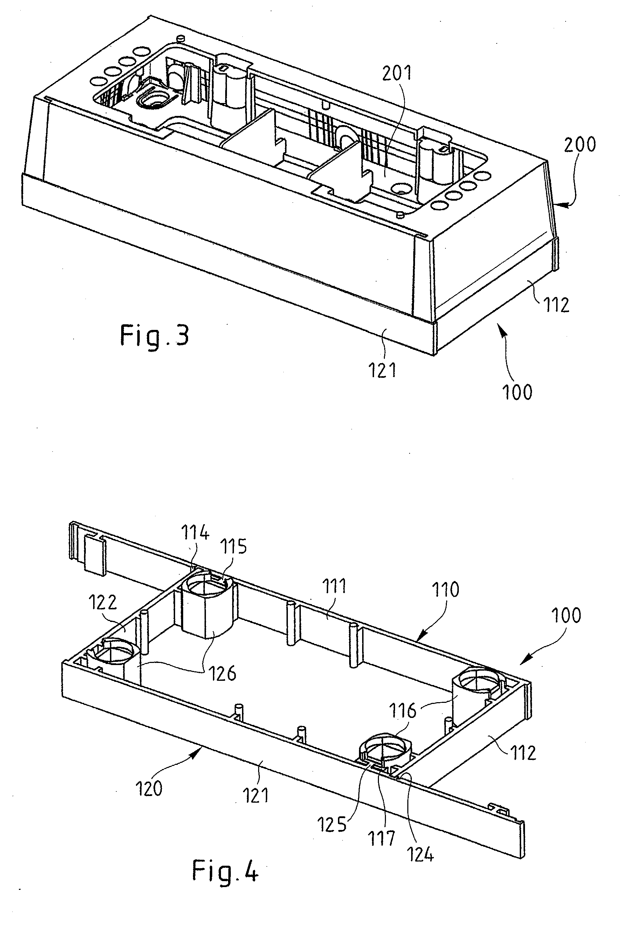

Pour réaliser une rehausse 100 de plus petite longueur, telle que celle représentée sur la figure 4, il suffit de glisser, d'une part, la rainure 117 portée par le plot 116 du montant transversal 112 de la pièce 110 sur la deuxième nervure 125 située à distance de l'extrémité libre du montant longitudinal 121 de l'autre pièce 120, et, d'autre part, la rainure 127 portée par le plot 126 du montant transversal 122 de la pièce 120 sur la deuxième nervure 115 située à distance de l'extrémité libre du montant longitudinal 111 de l'autre pièce 110.

Lors de cet assemblage, l'extrémité libre 112A, 122A de chaque montant transversal 112, 122 s'engage dans la rainure d'assemblage 113, 123 correspondante prévue à proximité de la ligne de prédécoupe 114, 124 du montant longitudinal 111, 121 correspondant.

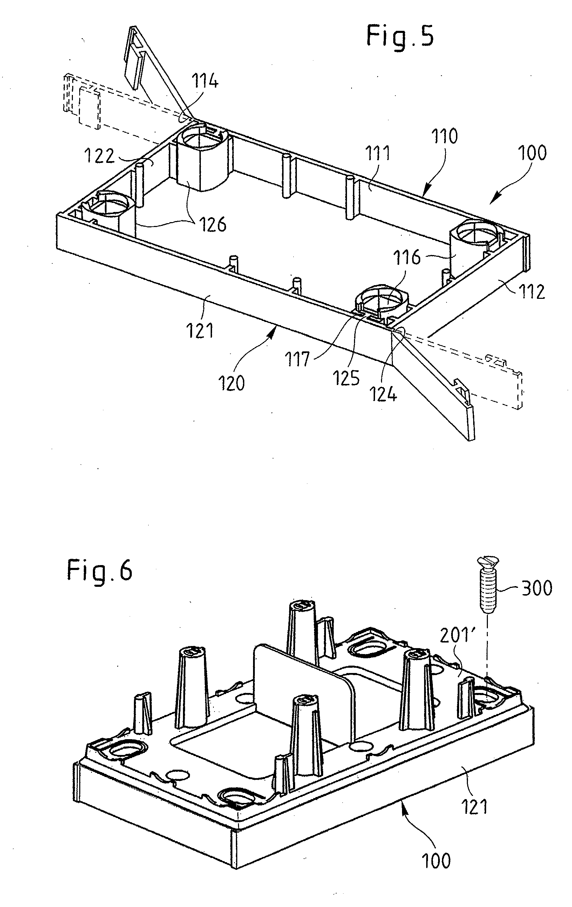

Puis, comme le montre la figure 5, il suffit de casser les montants longitudinaux 111, 121 de la rehausse 100 au niveau de leur ligne de prédécoupe 114, 124 pour éliminer les parties débordantes.

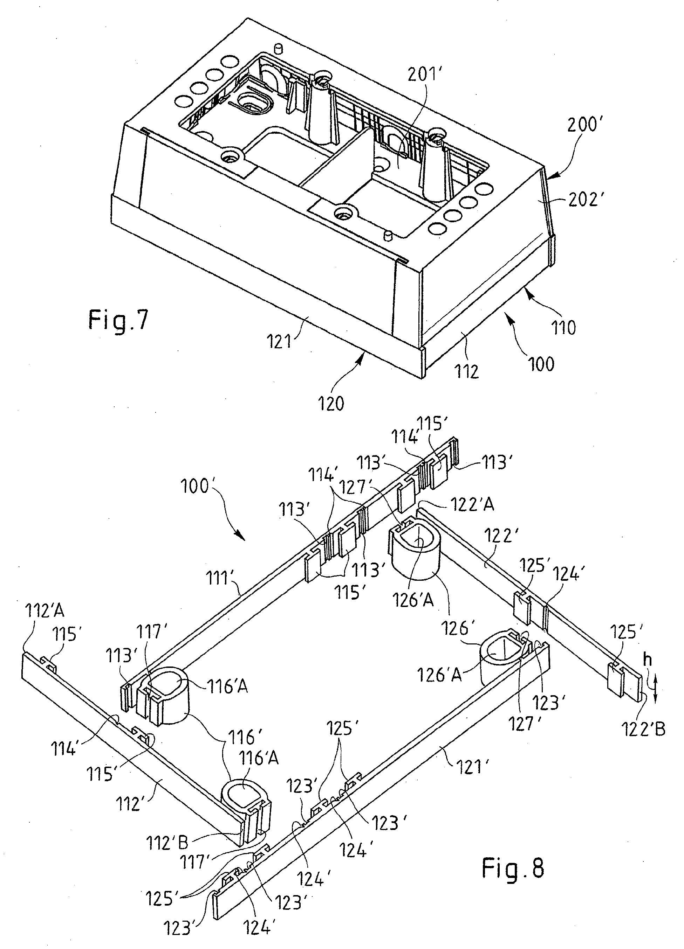

De cette manière, on obtient une rehausse 100 de plus petite longueur qui s'adapte à un boîtier 200', 201', 202' de plus petite longueur, comme le montrent les figures 6 et 7.

Sur la figure 8, on a représenté un deuxième mode de réalisation de la rehausse 100' selon l'invention.

Cette rehausse 100' en forme de cadre comporte quatre pièces 111', 112', 121', 122' distinctes assemblées entre elles, à savoir deux pièces 111', 121' longues formant les montants longitudinaux du cadre et deux pièces 112', 122' courtes formant les montants transversaux du cadre.

Les quatre pièces 111', 121', 112', 122' de la rehausse 100' comportent des aménagements identiques ou similaires à ceux de la rehausse 100 représentée sur la figure 1 de sorte qu'elles peuvent prendre des positions relatives différentes correspondant à différentes dimensions extérieures de boîtier.

Chacune des pièces 111', 112', 121, 122' de la rehausse 100' porte, à proximité d'une extrémité libre, un plot 116', 126' pourvu d'un orifice traversant 116'A, 126'A apte à accueillir un organe de fixation tel que la vis 300 pour la fixation du boîtier via la rehausse à une paroi. Les plots 116', 126' sont identiques aux plots 116, 126 de la rehausse 100 décrite précédemment.

En outre, les deux pièces 111', 121' longues comportent, à proximité de leur extrémité opposée au plot 116', 126', une série de premiers moyens d'accrochage constitués également par des nervures 115', 125' s'étendant sur la hauteur h de la pièce correspondante et présentant une section en forme de T identique à celle des nervures 115, 125 prévues sur chacune des deux pièces 110, 120 de la rehausse 100 précédemment décrite.

Entre deux nervures 115', 125' successives, chacune des pièces 111', 121' longues de la rehausse 100' comporte des lignes de prédécoupe 114', 124' s'étendant suivant la hauteur h de ladite pièce et permettant de découper ladite pièce à des endroits déterminés pour en ajuster la longueur.

A proximité de chacune des lignes de prédécoupe 114', 124', il est prévu également une rainure d'assemblage 113', 123' destinée à accueillir une extrémité libre 112'A, 122'A, 112'B, 122'B d'une pièce 112', 122' courte de la rehausse 100'.

Les deux pièces 111', 121' longues comportent en outre, à chacune de leurs extrémités libres, une rainure d'assemblage 113', 123' identique aux rainures d'assemblage 113', 123' disposées à côté des lignes de prédécoupe 114', 124'.

Les deux pièces 112', 122' courtes comportent, à proximité de leur extrémité libre 112'A, 122'A située à l'opposé du plot 116', 126' qu'elles portent, une nervure 115', 125' constituant un premier moyen d'accrochage et, à distance de cette première nervure 115', 125' approximativement dans une partie centrale de chacune de ces pièces, une autre nervure 115', 125' identique à la première.

Les pièces 112', 122' courtes comportent, entre les deux nervures 115', 125', une ligne de prédécoupe 114', 124'.

On remarquera que les deux pièces 112', 122' courtes de la rehausse 100' ne comportent pas de rainure d'assemblage du type de celle portée par les deux pièces 111', 121' longues.

En outre, chaque plot 116', 126' porté par chacune des pièces 111', 112', 121', 122' porte en saillie une rainure 117', 127' adaptée à être glissée sur une nervure 115', 125' correspondante. Cette rainure 117', 127' constitue ainsi le deuxième moyen d' accrochage apte à coopérer avec un desdits premiers moyens d'accrochage.

Chacune des pièces 111', 112', 121', 122' de la rehausse 100' est réalisée en une seule partie par formage d'une matière plastique.

Ainsi, en assemblant les quatre pièces, on peut réaliser huit rehausses 100' de différentes dimensions.

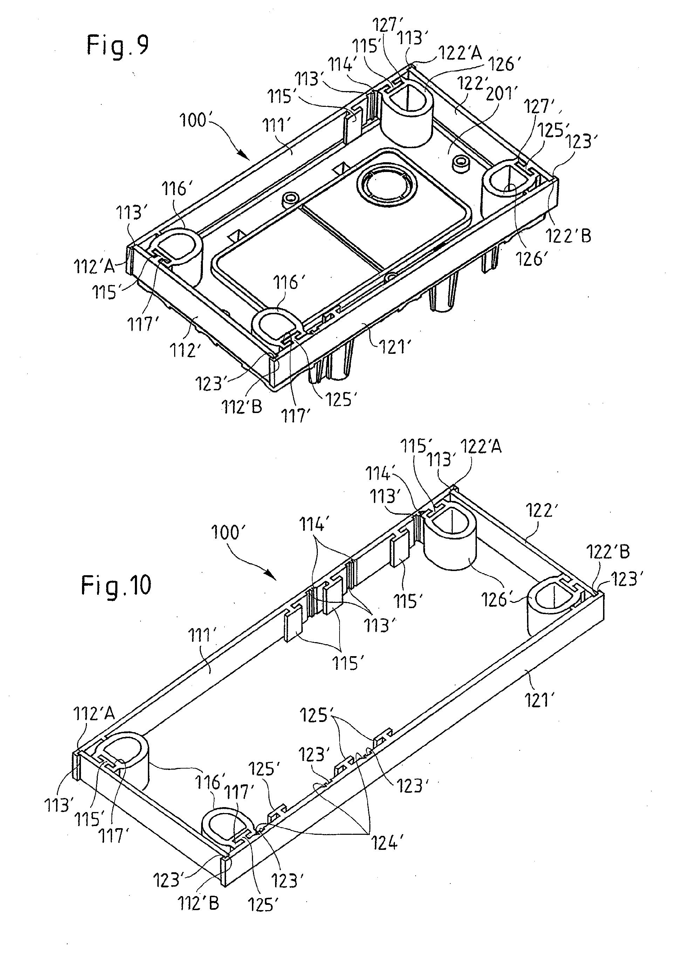

Plus particulièrement, comme le montre la figure 9, on peut tout d'abord réaliser une rehausse de petite largeur et de petite longueur en glissant chaque rainure 117', 127' de chaque plot 116', 126' de chaque pièce 111', 121' longue sur chaque nervure 115', 125' prévue dans la partie centrale de chaque pièce 112', 122' courte, et en glissant chaque rainure 117', 127' de chaque pièce 112', 122' courte sur la troisième nervure 115', 125', en partant de l'extrémité libre opposée au plot 116', 126', de chaque pièce 111', 121' longue.

Puis, on casse lesdites pièces 111', 112', 121', 122' de la rehausse 100' au niveau de leur ligne de prédécoupe 114', 124' pour éliminer les parties débordantes.

En maintenant la largeur de la rehausse 100' de la figure 9, on peut former une rehausse 100' de plus grande longueur, telle que représentée sur la figure 10, en assemblant les pièces 111', 121' longues non découpées aux pièces 112', 122' courtes découpées.

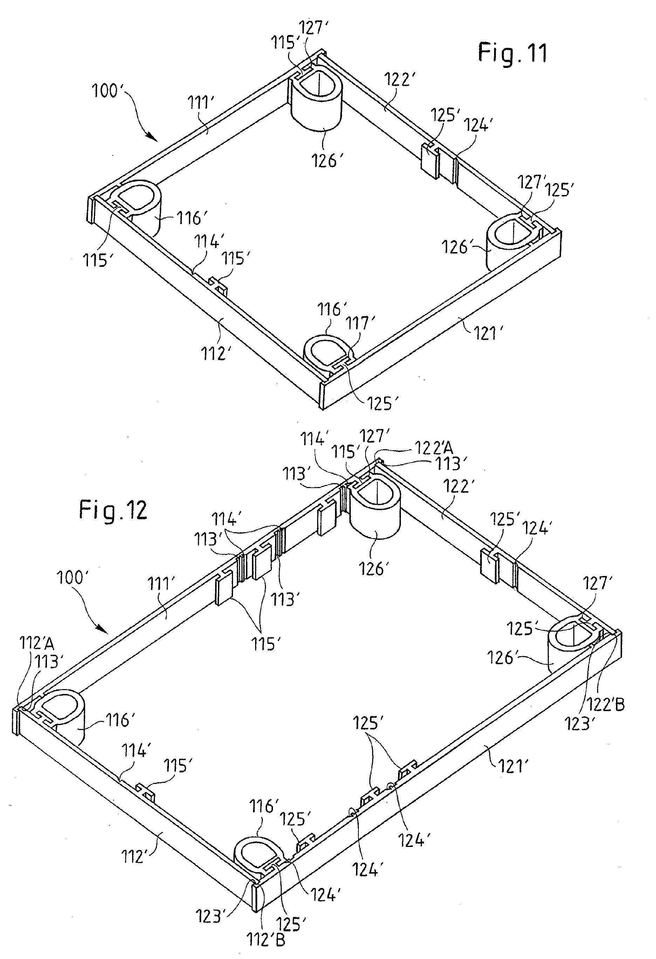

En outre, de la même manière, par assemblage et découpage desdites pièces 111', 112', 121', 122', en maintenant la longueur de la rehausse 100' représentée sur la figure 10, on peut former une rehausse 100' de plus grande largeur (voir figure 12) et, en maintenant la largeur de la rehausse 100' représentée sur la figure 12, on peut former une rehausse 100' de plus courte longueur (voir figure 11).

Dans chacun des cas représentés sur les figures 9 à 11, on assemble un plot 116', 126' d'une pièce 111', 112', 121', 122' avec la nervure 115, 125 située à proximité de l'extrémité libre opposée à celle portant le plot 116', 126' de l'autre pièce 111', 112', 121', 122'.

Dans tous les cas, les extrémités libres des pièces 112', 122' courtes s'emboîtent dans les rainures d'assemblage 113', 123' correspondantes des pièces 111', 121' longues de la rehausse 100'.

La présente invention n'est nullement limitée aux modes de réalisation décrits et représentés, mais l'homme du métier saura y apporter toute variante conforme à son esprit.

## Revendications

1. Rehausse (100 ; 100') apte à être positionnée sous un boîtier (200) pour appareillage électrique à disposer le long d'une goulotte en saillie d'une paroi, cette rehausse (100 ; 100') présentant la forme d'un cadre adapté aux dimensions extérieures dudit boîtier (200), **caractérisée en ce qu'**elle comporte une pluralité de pièces (110, 120 ; 111', 112', 121', 122') distinctes assemblées entre elles, lesdites pièces (110, 120 ; 111', 112', 121', 122') présentant des aménagements (114, 115, 117, 124, 125, 127 ; 114', 124', 115', 117', 125', 127') pour prendre différentes positions relatives correspondant à différentes dimensions extérieures de boîtier.

2. Rehausse (100; 100') selon la revendication 1, **caractérisée en ce que** lesdits aménagements comprennent, sur chacune desdites pièces (110, 120; 111', 112', 121', 122'), au moins une ligne de prédécoupe (114, 124; 114', 124') s'étendant suivant la hauteur (h) de ladite pièce et autorisant une réduction de la longueur de celle-ci en vue de la réduction de la longueur et/ou de la largeur de ladite rehausse.

3. Rehausse (100; 100') selon l'une des revendications 1 ou 2, **caractérisée en ce que** lesdits aménagements comprennent, sur chacune desdites pièces (110, 120 ; 111', 112', 121', 122'), au moins deux premiers moyens d'accrochage (115, 125 ; 115', 125') espacés l'un de l'autre et au moins un deuxième moyen d'accrochage (117, 127 ; 117', 127') complémentaire dudit premier moyen d'accrochage (115, 125 ; 115', 125').

4. Rehausse (100; 100') selon la revendication 3, **caractérisée en ce que** le premier moyen d'accrochage est une nervure (115, 125 ; 115', 125') s'étendant suivant la hauteur (h) de chaque pièce (110, 120 ; 111', 112', 121', 122') et le deuxième moyen d'accrochage est une rainure (117, 127 ; 117', 127') apte à être glissée sur ladite nervure (115, 125 ; 115', 125').

5. Rehausse (100; 100') selon la revendication 4, **caractérisée en ce que** ladite nervure (115, 125 ; 115', 125') présente une section en T.

6. Rehausse (100; 100') selon l'une des revendications 3 à 5, **caractérisée en ce que** ledit deuxième moyen d'accrochage (117, 127; 117', 127') est porté en saillie par un plot (116, 126 ; 116', 126') prévu à une extrémité de ladite pièce (110, 120 ; 111', 112', 121', 122') correspondante, ce plot (116, 126 ; 116', 126') étant pourvu d'un trou (116A, 126A; 116'A, 126'A) traversant destiné à accueillir un organe de fixation (300) du boîtier (200) à ladite paroi.

7. Rehausse (100; 100') selon l'une des revendications 1 à 6, **caractérisée en ce qu'**au moins deux desdites pièces (110, 120; 111', 121') comprennent chacune, à une extrémité, une rainure d'assemblage (113, 123; 113', 123') s'étendant suivant la hauteur (h) de ladite pièce et apte à recevoir par emboîtement une extrémité (112A, 122A ; 112'A, 112'B, 122'A, 122'B) d'une autre pièce (110, 120 ; 112', 122').

8. Rehausse (100; 100') selon la revendication 7, **caractérisée en ce que** les deux pièces (110, 120 ; 111', 121') comprennent chacune, à leurs deux extrémités, des rainures d'assemblage (113, 123 ; 113', 123') s'étendant suivant la hauteur (h) de ladite pièce et aptes à recevoir par emboîtement l'extrémité (112A, 122A; 112'A, 112'B, 122'A, 122'B) d'autres pièces (110, 120; 112', 122').

9. Rehausse (100 ; 100') selon l'une des revendications 7 ou 8, **caractérisée en ce que** les deux pièces (110, 120 ; 111', 121') comprennent chacune, à proximité de chaque ligne de prédécoupe (114, 124, 114', 124'), une rainure d'assemblage (113, 123 ; 113', 123') apte à recevoir par emboîtement l'extrémité d'une autre pièce.

10. Rehausse selon l'une des revendications précédentes, **caractérisée en ce qu'**elle comporte deux pièces (110, 120) en forme de L.

11. Rehausse selon l'une des revendications 1 à 9, **caractérisée en ce qu'**elle comporte quatre pièces (111', 112', 121', 122'), deux pièces longues et deux pièces courtes.

12. Rehausse selon l'une des revendications précédentes, **caractérisée** en que chaque pièce (110, 120 ; 111', 112', 121', 122') est réalisée en une seule partie par moulage d'une matière plastique.
